# EUROPEAN PATENT SPECIFICATION

(11) **EP 3 497 380 B1**
(45) Date of publication and mention of the grant of the patent: **02.06.2021**
(21) Application number: 17791470.2
(22) Date of filing: 04.08.2017
(51) Int. Cl.: F24S 10/40, F24S 50/00, F24S 30/425, F24S 40/52

(54) **AUTOMATIC HYDRAULIC MOTION SYSTEM OF ELEMENTS OF A COMPACT SOLAR COLLECTOR**
AUTOMATISCHES HYDRAULISCHES BEWEGUNGSSYSTEM VON ELEMENTEN EINES KOMPAKTEN SONNENKOLLEKTORS
SYSTÈME DE MOUVEMENT HYDRAULIQUE AUTOMATIQUE D'ÉLÉMENTS D'UN CAPTEUR SOLAIRE COMPACT

(30) Priority: 10.08.2016 IT 201600084083
(43) Date of publication of application: 19.06.2019
(73) Proprietor: Cordivari S.r.l., 64020 Morro D'Oro (TE) (IT)
(72) Inventor: Dl GIANNATALE Daniele, 64020 Morro d'Oro TE (IT); CORDIVARI , Ercole, 64020 Morro d'Oro TE (IT)
(74) Representative: Mulas, Chiara
(86) International application number: PCT/IT2017/000166
(87) International publication number: WO 2018/055648

(56) References cited:
- WO-A1-2011/014080
- WO-A1-2013/000186
- WO-A1-2016/071931
- WO-A2-2012/137149
- DE-A1-102012 206 987
- FR-A1- 2 446 931
- GB-A- 2 516 888
- US-A- 3 162 189
- US-A- 3 915 147
- US-A- 4 027 653
- US-A1- 2009 189 040
- US-A1- 2010 307 478
- US-A1- 2012 210 999
- DATABASE WPI Section PQ, Week 200942 Thomson Scientific, London, GB; Class Q74, AN 2009-K45847 -& CN 201 251 305 Y (BEIJING SOLAR RES INST CO LTD) 3 June 2009 (2009-06-03)

## Description

The present invention relates to an automatic motion system of elements of a compact solar collector with integrated storage tank.

More specifically, the present invention relates to a motion system for actuating kinematics in solar systems automatically operated by increasing of the temperature of a fluid within a set technical volume.

As it is known, a fluid subjected to a temperature increase, naturally increases its volume; in case it is not possible providing the fluid during the dilatation stage the volume required for its expansion, it will tend to increase its pressure as long as the temperature increase will not cease. The pressure generated within the aforementioned technical volume can be exploited to operate devices converting the energy contained in the fluid, in this case in the form of pressure, into other forms.

Examples of such devices are disclosed in prior art document DE 10 2012 206 987 A1.

This principle is used in some devices such as thermostatic devices, used for automatic regulating heaters, and thermostatic lever valves, used to regulate air dragging in biomass heaters.

The first are essentially of three types: wax, liquid and gas heaters. In the wax ones, the sensor is made up of a hard casing filled in with wax. With the temperature increase, wax dilates and pushes the shutter into a closure position by winning the resistance of a preloaded spring. They are sensors characterized by long response times (many tens of minutes) to reach the balancing position.

In liquid thermostatic devices, the sensor consists of a rigid casing filled in with a liquid, usually alcohol, acetone or organic liquid mixtures similar to those used in thermometers. As the temperature increases, the liquid expands and pushes the shutter in a closure position by winning the resistance of a preloaded spring. They are currently among the most used sensors since they can ensure a good response time.

In the last type of thermostatic device, the sensor is made up of a rigid casing filled in with a gas. As the temperature increases, the gas dilates and pushes the shutter into a closure position, winning the resistance of a preloaded spring. Gas is compressible and this can be a problem in presence of too high differential pressures that can lead to unwanted opening of the shutter.

Valves used in biomass stoves use the same principle as thermostatic devices: when the temperature of the water is varied in the generator interspace, the dragging adjuster modifies the opening of the combustion air intake door by dilatation or contraction of the thermostatic sensor connected to the lever mechanism formed by the control shaft and chain.

It is also known that compact solar collectors generally have a large dimension and a rduced thickness, and contain inside them the storage tank of the fluid to be heated, preferably sanitary water, and are characterized by excellent energy exchange efficiency and low thermal inertia efficiency. In case of compact indirect irradiation solar collectors, they also include a storage tank for a direct solar irradiated primary fluid and can provide heat to the fluid to be heated or secondary fluid.

Compact solar collectors also have the advantage of being simple to install, as it is sufficient to connect the inlet and outlet tubes to the user.

At present, such compact solar collectors have the disadvantage of not maintaining the same thermal efficiency even during night time. In fact, since the accumulation of fluid to be heated directly exposed to sunlight, it tends to reduce during night time. Thus, the day-catching efficacy prerogative generates the same limit as the capability to maintain the accumulated energy overnight. At present no solutions exist able to insulate such accumulation without inhibiting the necessary collecting capacity. Alternatively, known techniques include solar collectors comprising a collector capable of collecting solar energy, and a separate storage tank and fluid connection with the collector device for storing the fluid to be heated. The accumulation is therefore appropriately insulated from the outside and allows to store accumulated heat during daytime hours and to limit dispersions to the outside. However, in such solar collectors, the accumulation has far larger dimensions than its net useful capacity to contain the heated liquid, which therefore has rather large dimensions.

An example of such solar collectors is described in prior art document CN 201 251 305 Y.

Further, compact solar collectors including vacuum tubes are known as collector elements, within which are arranged the tubes in which the fluid to be heated flows. Vacuum tubes allow to reduce night thermal dispersions through the upper cover. As it is well known, the best thermal insulator is vacuum because in the presence of the same, no convective thermal exchange mechanisms occur, due to the free circulation of vortices that are generated within all fluids due to the temperature gradients. In these collectors, the collector system is positioned within special concentric tubes to which the task of thermal isolation of the collector is due. This insulating capacity is achieved by creating a chamber in which the vacuum is realized. Thanks to the insulating characteristic of vacuum tube, it is therefore possible to increase the temperature of the fluid to be heated flowing through the tubes. However, the temperature of such fluid can sometimes reach very high levels. If overheating becomes uncontrolled, damage to the implant or its components may occur.

A direct problem due to excessive overheating of the tubes is connected to the excessive limestone precipitation.

In fact, excessive heating, for a high water hardness value (containing high amounts of limestone), causes an excessive precipitation of limestone that can lead to the incrustation of tubes or ducts.

At present, there are also systems of solar shields electrically operated and controlled by a temperature sensor placed inside the solar collector or of the system. Said systems are essentially comprised of an electric motor and a shielding system. In the flat collectors field, shielding is generally made up of a shutter, while in the vacuum tube collectors it can be either a shutter or lamellae coaxial with respect to the collector tubes. The weakness of these types of shields lies in the fact that, in the absence of electric current, they are not able to guarantee the protection of the solar system against overtemperature or, when placed in a closed condition in case of power failure, the interruption of the system itself. Another necessary condition, perhaps obvious, is the need to receive power through suitable systems in the installation locations. Another generic limitation of such electrical shielding systems is that they are usually not modulating because they interact with the logic on/off sensor system on the temperature readings established on a timely basis.

An example of such system is described in prior art document US 2010/0307478 A1.

The object of the present invention is to replace the normal electric drives with systems capable of ensuring the protection of solar collectors in any condition, even in the absence of electric current, with the intrinsic ability to self-regulate the solar system sensor needing.

Prior art document GB 2 516 888 A discloses a solar collector comprising an automatic motion system by dilatation of a fluid for acting on shields shielding the collector elements of the solar collector.

It is therefore a specific object of the present invention to provide an automatic motion system by dilatation of a fluid for acting on elements of a compact solar collector with integrated storage tank, said system comprising a compact solar collector with integrated storage tank, said compact solar collector having at least a face exposed to the solar radiation and at least another face not facing the solar radiation, said solar collector comprising a plurality of primary conduits, for containing at least one primary heat carrier element adapted to the storage of thermal energy, and an external collector element arranged movable with respect to each primary conduit, adapted to overlap, at least partially, during its motion, each primary conduit, each external collector element being able to rotate on itself, preferably of 180 °, with respect to the respective primary conduit, wherein drive and transmission means are provided, said drive and transmission means acting on said external collector elements being configured so as to move said external collector elements between a collecting position and a shielding position, and vice versa, as a function of the pressure inside said primary conduits. According to the invention, said external collector element is comprised of a vacuum tube, disposed coaxially with respect to each primary conduit, and said drive and transmission means comprise at least an hydraulic cylinder, motion transmission mechanisms comprising one or more racks and gears and a return spring, acting on said hydraulic cylinder.

In said embodiment, transmission of motion is realised by gears having different dimensions.

Always according to a preferred embodiment of the invention the rack acts simultaneously on all the gears.

Furthermore, according to the invention, said shielding element is comprised of the same external collector element suitably made opaque to solar radiation.

Still according to the invention, said drive and transmission means are configured so that when the pressure increases in said primary tubes above a first value, said drive and actuating means act on said external collector elements to pass towards said shielding position, and when said pressure decreases in said primary tubes, said actuating means bring back said external collector elements towards said sensing position.

As it is known, the work done by a fluid when, in case of a temperature increase, it is allowed to expand, can be exploited to operate kinematics in solar collectors. In particular, these kinematics operate shields to prevent the panel from stagnating. Even more particularly, these kinematics move vacuum tubes of compact or standard panels, lamellae coaxial with respect to compact or standard panel vacuum tubes, shutters in flat panels. By the aforementioned system, it is also possible to move the solar collector, so as to favorably align the capturing surface with respect to the sun's rays and increase the effective efficiency of the system. The motion of the entire collector can also be exploited to prevent the system from continuing to absorb solar radiation in case of a rise temperature beyond a threshold value.

By dimensioning the hydraulic cylinder on the basis on the force required to operate the kinematics and the volume required for the expansion of the technical accumulation, it is possible to obtain mechanisms with multiple characteristics in terms of force and driving.

The choice of the stroke, characterizing the hydraulic cylinder, is carried out in such a way to ensure the expansion volume required by the primary fluid contained in the accumulation in the operating temperature range. This also limits the pressure increase which, given the use of incompressible fluid, would tend to be high: the system also functions as an expansion vessel.

Since there is a single pressure in this automatic hydraulic system, the return of the hydraulic cylinder will preferably be carried out by means of a suitably dimensioned return spring. The use of the spring allows to accumulate a sufficient amount of energy in the form of elastic energy that will be returned at the return stroke or when the cylinder operation pressure tends to decrease.

The invention will now be described for illustration but not limitative purposes, with particular reference to the figures of the accompanying drawings, wherein:
figure 1 is a perspective view of a first embodiment of the motion system according to the invention;
figure 2 is a side view of the system of figure 1;
figure 3 is a perspective view of a second embodiment of the motion system according to the invention;
figure 4 is a side view of the system of figure 3;
figure 5 is a perspective view of a third embodiment of the motion system according to the invention;
figure 6 is a side view of the system of figure 5;
figure 7 is a perspective view of a fourth embodiment of the motion system according to the invention; and
figure 8 is a side view of the system of figure 7.

In a solar collector, the shielding system has the function of blocking solar radiation and not allowing its penetration inside the collector to the tube portion with the selective coating and thus contributing to the heating of the primary fluid.

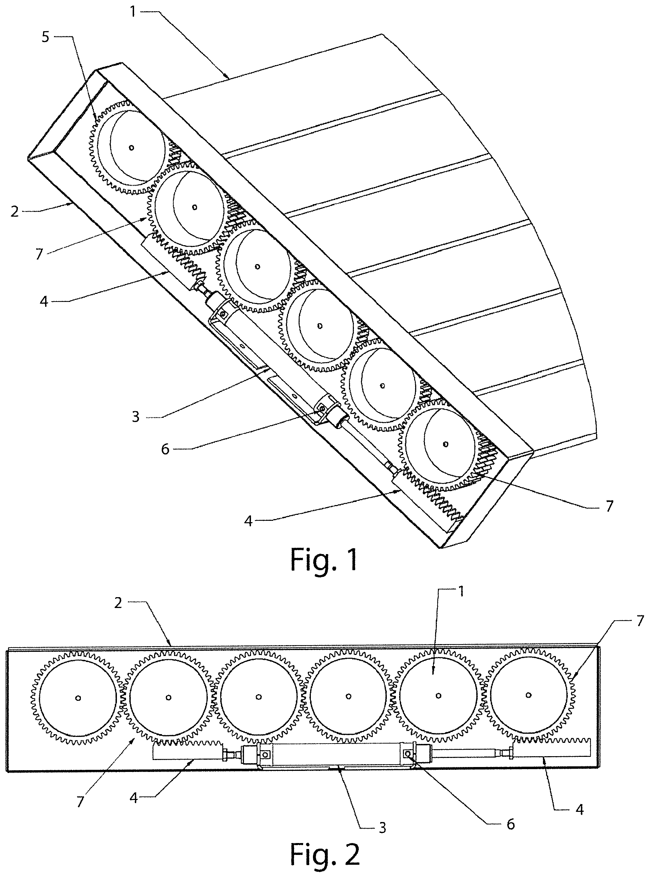

In figures 1 to 8, the system according to the invention is shown applied to a solar collector, in which the shielding system is formed by the same glass tubes also acting as collectors.

In the embodiment shown, for example, films are applied on each collector tube, said films being opaque to the solar radiation initially directed on the opposite side to the sun's rays. When the system rises temperature, the pressure inside the primary fluid begins increasing; at this point, the automatic shielding system starts having a role. By means of a system consisting of rack and toothed wheels, the linear motion of the piston is converted into a rotary motion, allowing the collector tubes to expose the shielding part. At this point the solar collector begins to self-regulate: at a pressure increase it will correspond the advancement of the piston and its exposure by the collectors of the opaque surface; when the pressure decreases due to a decrease in the solar collector temperature, for example due to a user's energy withdrawal or to a decrease in solar irradiation, it will correspond to a retraction of the piston that will bring the system into collector mode, i.e. with the shielding part in the starting position. Referring particularly to figures 1 and 2, it is shown a first embodiment of the system according to the invention, comprising the glass collector tube 1, the structure 2, the hydraulic cylinder 3, the rack 4, the driven toothed wheels 5, the hydraulic cylinder pressure intake 6, and the drive gearwheels 7.

In this specific embodiment, the hydraulic cylinder 3 acts on two driving wheels 7, which, with the adjacent gears, transfer the rotary motion to the whole conduit system. The driving wheels 7 have a greater gear width so as to allow the rack 4 to engage without interfering with the teeth of the driven wheels 5.

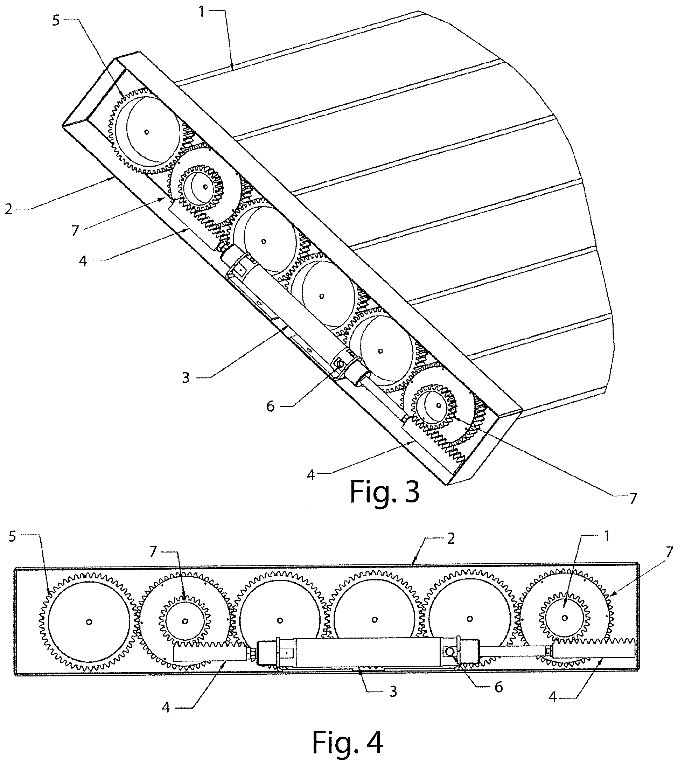

In the embodiment shown in figures 3 and 4, respectively, a perspective view and a side view of a second embodiment, in which the same numerical references are used to indicate parts corresponding to those of figures 1 and 2, the driving wheels 7 have a lower diameter than that of the first embodiment. In this way, with the same stroke of the hydraulic cylinder 3, it is possible to make the tube system 1 realizing a larger rotation.

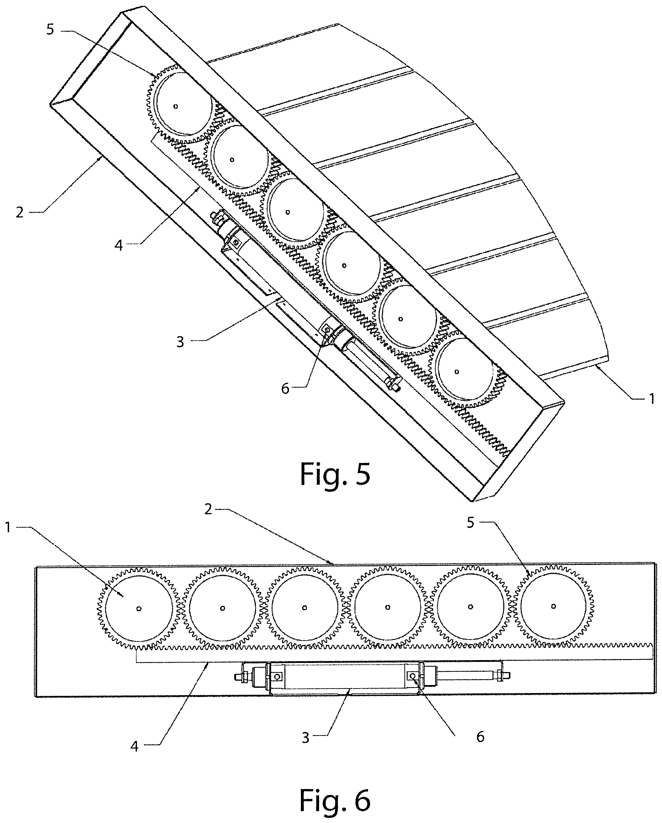

Figures 5 and 6 respectively show a perspective view and a side view of a third embodiment, in which the same numeral references are used to indicate parts corresponding to those of the preceding figures.

In this embodiment, the rack 4 acts on all the toothed wheels 5 simultaneously. The latter do not engage each other, allowing the system according to the invention to be operated using a lesser force for its motion, since the friction component introduced by mutual interaction between the wheels has been eliminated.

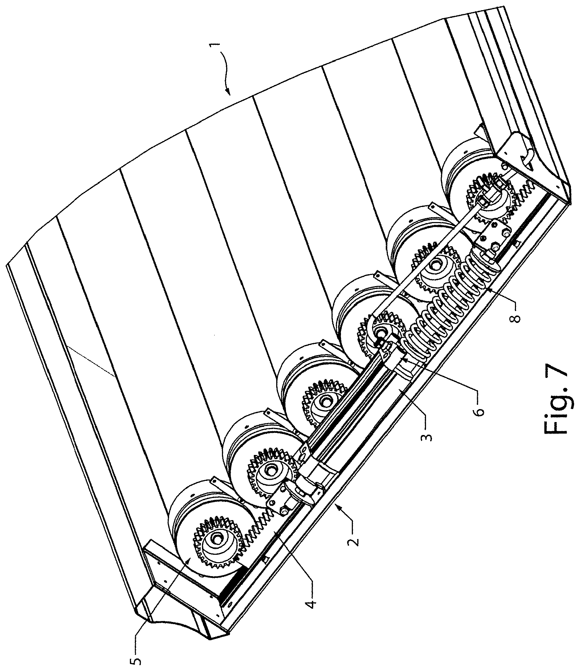

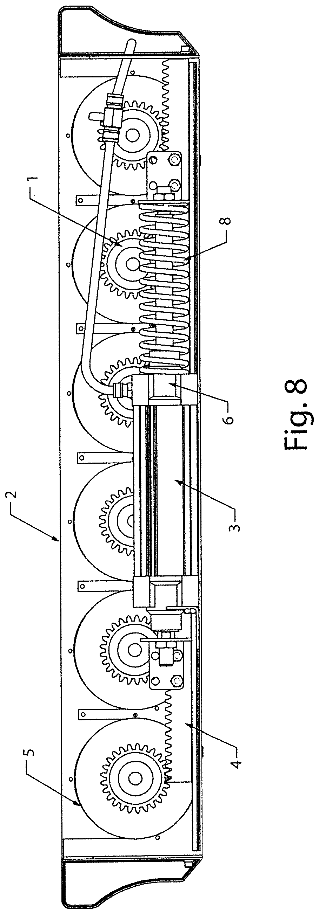

Figures 7 and 8 are respectively a perspective view and a side view of a fourth embodiment of the system according to the invention, in which the same numeral references are used to indicate parts corresponding to those of the preceding figures.

In this embodiment, besides eliminating the friction component due to mutual interaction between the teeth of the wheels 5 by using smaller diameter driving wheels, it is possible to obtain the desired rotation of the tube system 1 using a cylinder 3 having a lower stroke. Therefore, a shorter length of the rack 4 and, consequently, a greater compactness of the whole system according to the invention may be provided.

On the piston rod there is provided a return spring 8. This embodiment, for its adjustment, requires the optimization of various variable, such as: features of the return spring 8, fluid volume which, by expanding, activates the cylinder 3, hydraulic cylinder 3 characteristics, nature and dimensions of the transmission of the motion means.

In particular, the characteristics of the spring 8 in terms of length, useful stroke, and elasic constant must allow for the counter-force required to make the movement reversible. The spring 8 will then be dimensioned to ensure, with a preload choice, said force.

The characteristics of the hydraulic cylinder 3 allow to deliver the required force for the movement and at the same time ensure the fluid expansion volume so as not to reach too high pressures.

The geometry of the the motion transmitting means finally has to allow the optimization of shielding degree. Particularly, the specific choice of this geometry allows for the rotation of the required shield with the minimum stroke of the piston by reducing the cost, weight and size of the hydraulic cylinder.

The balance created between these different features allows for a dynamic shielding of the solar collector.

Particularly, when the temperature within the primary fluid grows, the system begins to move and partially block incoming solar radiation as long as the power provided by the sun is exactly the same as that dissipated from the system outward in terms of thermal dispersions.

In this ways maximum efficiency of the system is always ensured and at the same time maintains the integrity of the system as the high temperatures are limited.

Further, the use of adhesive shielding elements helps to avoid the problems caused by the wind. Positioning shields independently rotating with respect to the glass tubes may lead to instability or resonance phenomena that would put the tube's integrity at risk.

In the above, the preferred embodiments have been described and variants of the present invention have been suggested, but it is to be understood that those skilled in the art will be able to make modifications and changes without departing from the scope as defined by the enclosed claims.

## Claims

1. Automatic motion system by dilatation of a fluid for acting on elements of a compact solar collector with integrated storage tank, said system comprising a compact solar collector with integrated storage tank, said compact solar collector having at least a face exposed to the solar radiation and at least another face not facing the solar radiation, said solar collector comprising a plurality of primary conduits, for containing at least one primary heat carrier element adapted to the storage of thermal energy, and an external collector element arranged movable with respect to each primary conduit, adapted to overlap, at least partially, during its motion, each primary conduit, each external collector element being able to rotate on itself, preferably of 180°, with respect to the respective primary conduit, and wherein drive and transmission means are provided, said drive and transmission means acting on said external collector elements being configured so as to move said external collector elements between a collecting position and a shielding position, and vice versa, as a function of the pressure inside said primary conduits, said system being **characterized in that** said external collector element is comprised of a vacuum tube (1), disposed coaxially with respect to each primary conduit, and **in that** said drive and transmission means comprise at least an hydraulic cylinder (3), motion transmission mechanisms comprising one or more racks (4) and gears (5, 7) and a return spring (8), acting on said hydraulic cylinder (3).

2. System according to claim 1, **characterized in that** transmission of motion is realised by gears (5, 7) having different dimensions.

3. System according to claim 2, **characterized in that** the gears comprise driven toothed wheels (5) and drive gear wheels (7) and **in that** the rack (4) acts on said drive gear wheels (7).

4. System according to claim 1, **characterized in that** the rack (4) acts simultaneously on all the gears (5).

5. System according to claim 4, **characterized in that** the gears (5) do not engage each other.

6. System according to one of the preceding claims, **characterized in that** said shielding position is obtained by a portion of the same external collector element suitably made opaque to solar radiation overlapping the respective primary conduit.

7. System according to claim 6, **characterized in that** said portion is suitably made opaque to solar radiation by means of an opaque adhesives or films.

8. System according to any of the preceding claims, **characterized in that** said drive and transmission means are configured so as to move said external collector elements between a collecting position and a shielding position, and vice versa, also as a function of said at least one primary heat carrier element temperature.

9. System according to any one of the preceding claims, **characterized in that** said drive and transmission means are configured so that when the pressure increases in said primary conduits above a first value (Pi), said drive and transmission means act on said external collector elements to pass towards said shielding position, and when said pressure decreases in said primary conduits, said drive and transmission means bring back said external collector elements towards said collecting position.

## Patentansprüche

1. Automatisches Bewegungssystem durch Wärmeausdehnung einer Flüssigkeit zur Einwirkung auf Elemente eines kompakten Sonnenkollektors mit integriertem Speichertank, wobei das System einen kompakten Sonnenkollektor mit integriertem Speichertank umfasst, wobei der kompakte Sonnenkollektor mindestens eine der Sonnenstrahlung ausgesetzte Fläche und mindestens eine andere, der Sonnenstrahlung nicht zugewandte Fläche aufweist, wobei der Sonnenkollektor eine Vielzahl von Primärkanälen zur Aufnahme mindestens eines primären Wärmeträgerelements, das zur Speicherung von thermischer Energie ausgelegt ist, und ein Außenkollektorelement, das in Bezug auf jeden Primärkanal beweglich angeordnet ist, umfasst, das dazu geeignet ist, während seiner Bewegung jeden Primärkanal zumindest teilweise zu überlappen,
wobei jedes Außenkollektorelement in der Lage ist, sich um sich selbst, bevorzugt um 180°, in Bezug auf den jeweiligen Primärkanal zu drehen, und
wobei Antriebs- und Übertragungsmittel bereitgestellt sind, wobei die Antriebs- und Übertragungsmittel, die auf die Außenkollektorelemente einwirken, so konfiguriert sind, dass sie die Außenkollektorelemente als eine Funktion des Drucks innerhalb der Primärkanäle zwischen einer Sammelposition und einer Abschirmungsposition und umgekehrt bewegen,
wobei das System **dadurch gekennzeichnet ist, dass** das Außenkollektorelement aus einer Vakuumröhre (1) besteht, die koaxial in Bezug auf jeden Primärkanal angeordnet ist,
und dass die Antriebs- und Übertragungsmittel mindestens einen Hydraulikzylinder (3), Bewegungsübertragungsmechanismen, die eine oder mehrere Zahnstangen (4) und Zahnräder (5, 7) umfassen, und eine Rückstellfeder (8) umfassen, die auf den Hydraulikzylinder (3) einwirken.

2. System nach Anspruch 1, **dadurch gekennzeichnet, dass** die Übertragung von Bewegung durch Zahnräder (5, 7) realisiert wird, die unterschiedliche Abmessungen aufweisen.

3. System nach Anspruch 2, **dadurch gekennzeichnet, dass** die Zahnräder angetriebene Zahnräder (5) und Antriebszahnräder (7) umfassen und dass die Zahnstange (4) auf die Antriebszahnräder (7) wirkt.

4. System nach Anspruch 1, **dadurch gekennzeichnet, dass** die Zahnstange (4) gleichzeitig auf alle Zahnräder (5) einwirkt.

5. System nach Anspruch 4, **dadurch gekennzeichnet, dass** die Zahnräder (5) nicht ineinander greifen.

6. System nach einem der vorstehenden Ansprüche, **dadurch gekennzeichnet, dass** die Abschirmungsposition durch einen Abschnitt desselben Außenkollektorelements erreicht wird, der in geeigneter Weise für Sonneneinstrahlung undurchlässig gemacht ist und den jeweiligen Primärkanal überlappt.

7. System nach Anspruch 6, **dadurch gekennzeichnet, dass** der Abschnitt in geeigneter Weise mittels eines lichtundurchlässigen Klebstoffs oder einer lichtundurchlässigen Folie für Sonneneinstrahlung undurchlässig gemacht ist.

8. System nach einem der vorstehenden Ansprüche, **dadurch gekennzeichnet, dass** die Antriebs- und Übertragungsmittel so konfiguriert sind, dass sie die Außenkollektorelemente auch in Abhängigkeit von der Temperatur des mindestens einen primären Wärmeträgerelements zwischen einer Sammelposition und einer Abschirmungsposition und umgekehrt bewegen.

9. System nach einem der vorstehenden Ansprüche, **dadurch gekennzeichnet, dass** die Antriebs- und Übertragungsmittel so konfiguriert sind, dass, wenn der Druck in den Primärkanälen über einen ersten Wert (P₁) ansteigt, die Antriebs- und Übertragungsmittel auf die Außenkollektorelemente einwirken, um in Richtung der Abschirmungsposition zu gelangen, und wenn der Druck in den Primärleitungen abnimmt, die Antriebs- und Übertragungsmittel die Außenkollektorelemente in Richtung der Sammelposition zurückbringen.

## Revendications

1. Système de mouvement automatique par dilatation d'un fluide pour agir sur des éléments d'un collecteur solaire compact avec réservoir de stockage intégré, ledit système comprenant un collecteur solaire compact avec réservoir de stockage intégré, ledit collecteur solaire compact présentant au moins une face exposée au rayonnement solaire et au moins une autre face ne faisant pas face au rayonnement solaire, ledit collecteur solaire comprenant une pluralité de conduits primaires, pour contenir au moins un élément transporteur de chaleur primaire adapté au stockage d'énergie thermique, et un élément de collecteur externe agencé de façon mobile par rapport à chaque conduit primaire, conçu pour chevaucher, au moins partiellement, pendant son mouvement, chaque conduit primaire, chaque élément de collecteur externe étant capable de tourner sur lui-même, de préférence de 180°, par rapport au conduit primaire respectif,
et dans lequel
des moyens d'entraînement et de transmission sont prévus, lesdits moyens d'entraînement et de transmission agissant sur lesdits éléments de collecteur externes étant configurés afin de déplacer lesdits éléments de collecteur externes entre une position de collecte et une position de protection ; et vice versa, comme une fonction de la pression à l'intérieur desdits conduits primaires, ledit système étant **caractérisé en ce que** ledit élément de collecteur externe est composé d'un tube à vide (1), disposé de façon coaxiale par rapport à chaque conduit primaire, et **en ce que** lesdits moyens d'entraînement et de transmission comprennent au moins un vérin hydraulique (3), des mécanismes de transmission de mouvement comprenant une ou plusieurs crémaillères (4) et des engrenages (5, 7) et un ressort de retour (8), agissant sur ledit vérin hydraulique (3).

2. Système selon la revendication 1, **caractérisé en ce que** la transmission de mouvement est réalisée par des engrenages (5, 7) présentant des dimensions différentes.

3. Système selon la revendication 2, **caractérisé en ce que** les engrenages comprennent des roues dentées entraînées (5) et des roues d'engrenage d'entraînement (7) et **en ce que** la crémaillère (4) agit sur lesdites roues d'engrenage d'entraînement (7).

4. Système selon la revendication 1, **caractérisé en ce que** la crémaillère (4) agit simultanément sur tous les engrenages (5).

5. Système selon la revendication 4, **caractérisé en ce que** les engrenages (5) ne s'engrènent pas les uns les autres.

6. Système selon l'une des revendications précédentes, **caractérisé en ce que** ladite position de protection est obtenue par une portion du même élément de collecteur externe rendu opaque de façon appropriée au rayonnement solaire chevauchant le conduit primaire respectif.

7. Système selon la revendication 6, **caractérisé en ce que** ladite portion est rendue opaque de façon appropriée au rayonnement solaire au moyen d'adhésifs ou de films opaques.

8. Système selon l'une quelconque des revendications précédentes, **caractérisé en ce que** lesdits moyens d'entraînement et de transmission sont configurés de façon à déplacer lesdits éléments de collecteur externes entre une position collectrice et une position de protection, et vice versa, également comme une fonction de ladite au moins une température d'élément transporteur de chaleur primaire.

9. Système selon l'une quelconque des revendications précédentes, **caractérisé en ce que** lesdits moyens d'entraînement et de transmission sont configurés de sorte que lorsque la pression augmente dans lesdits conduits primaires au-dessus d'une première valeur (P₁), lesdits moyens d'entraînement et de transmission agissent sur lesdits éléments de collecteur externes pour passer vers ladite position de protection, et lorsque ladite pression diminue dans lesdits conduits primaires, lesdits moyens d'entraînement et de transmission ramènent lesdits éléments de collecteur externes vers ladite position collectrice.
